(19)

Europäisches Patentamt
European Patent Office
Office européen des brevets

(11) **EP 4 113 402 A1**

(12) **EUROPEAN PATENT APPLICATION**

(43) Date of publication:
**04.01.2023 Bulletin 2023/01**

(21) Application number: **22171563.4**

(22) Date of filing: **04.05.2022**

(51) International Patent Classification (IPC):
**G06Q 10/04** (2012.01)      **G06Q 50/04** (2012.01)
**G06Q 10/06** (2012.01)

(52) Cooperative Patent Classification (CPC):
**G06Q 10/04; G06Q 10/0631; G06Q 50/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 US 202117305060**

(71) Applicant: FUJITSU LIMITED
**Kawasaki-shi, Kanagawa 211-8588 (JP)**

(72) Inventors:
• **Ushijima-Mwesigwa, Hayato**
  **Sunnyvale, CA, 94085 (JP)**
• **Mandal, Avradip**
  **Sunnyvale, CA, 94085 (JP)**
• **Ghosh, Indradeep**
  **Sunnyvale, CA, 94085 (JP)**
• **Xuan, Yuxin**
  **Sunnyvale, CA, 94085 (JP)**

(74) Representative: **Hoffmann Eitle**
**Patent- und Rechtsanwälte PartmbB**
**Arabellastraße 30**
**81925 München (DE)**

(54) **MULTILEVEL METHOD FOR PRODUCTION SCHEDULING USING OPTIMIZATION SOLVER MACHINES**

(57)     According to an aspect of an embodiment, operations may include receiving a set of inputs associated with a set of orders, a set of production lines, and timelines for the production. The operations may further include initializing each of a set of intervals to be used for scheduling of the production, based on a first interval size. The operations may further include generating a first Quadratic Unconstrained Binary Optimization (QUBO) formulation. The operations may further include generating a first solution of the first QUBO formulation. The operations may further include updating each of the initialized set of intervals based on a second interval size. The operations may further include generating a second QUBO formulation. The operations may further include generating a second solution by solving the second QUBO formulation and determining a schedule to be used for the production of the set of orders, based on the generated second solution.

*FIG. 1*

**Description**

FIELD

The embodiments discussed in the present disclosure are related to multilevel method for production scheduling using optimization solver machines.

BACKGROUND

Modern production or manufacturing facilities typically require production scheduling and scheduling in advance to deliver orders on time and manage production resources efficiently. Typically, a production facility includes one or more production lines which operate alone or in tandem to produce orders according to a production schedule. Most of such facilities are at some point in time affected by issues, such as a production line failure, order cancellation, unexpected surge in orders, a reduction in production capacity for a day or a specific period, or priority escalations.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

SUMMARY

According to an aspect of the disclosure, operations may include receiving a set of inputs. The received set of inputs may include a first input associated with a set of orders for production, a second input associated with a set of production lines to be used for the production, and a third input associated with timelines for the production. The operations may further include initializing each of a set of intervals to be used for scheduling of the production, based on a first interval size. Initially, the first interval size may be greater than the size of a production slot. The operations may further include generating a first Quadratic Unconstrained Binary Optimization (QUBO) formulation based on the initialized set of intervals, the received set of inputs, and one or more first constraints associated with the scheduling. The operations may further include solving the first QUBO formulation on a first optimization solver machine to generate a first solution and updating each of the initialized set of intervals based on a second interval size. The second interval size may be less than the first interval size. The operations may further include generating a second QUBO formulation based on the updated set of intervals, the first solution, and one or more second constraints associated with the scheduling. The operations may further include solving the generated second QUBO formulation on the first optimization solver machine to generate a second solution and determining a schedule to be used for the production of the set of orders based on the generated second solution.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram representing an exemplary network environment for multilevel method for production scheduling using optimization solver machines,

FIG. 2 is a block diagram of a system for multilevel method for production scheduling using optimization solver machines,

FIGs. 3A and 3B, collectively illustrates an example electronic user interface (UI) for providing input(s) for multilevel method production scheduling using optimization solver machines,

FIG. 4 is a flowchart of a generalized multilevel method for production scheduling using optimization solver machines, and

FIG. 5 is a flowchart of an exemplary method for multilevel method for production scheduling using optimization solver machines,

FIG. 6 is a flowchart of an example method of solving subproblems associated with production scheduling problem using heuristics,

all according to at least one embodiment described in the present disclosure.

DESCRIPTION OF EMBODIMENTS

Embodiments of the present disclosure are explained with reference to the accompanying drawings.

Some embodiments described in the present disclosure relate to methods and systems for multilevel method for production scheduling using optimization solver machines. Production scheduling may be defined as determining a plan or a schedule for production of a set of orders at a production facility (or at multiple production facilities) in an efficient manner. The plan or schedule must ensure that the orders are ready to transport on or before a delivery or fulfillment date. Also, the plan or schedule must be compliant with most of production-related constraints, with minimum violation of such constraints.

Usually, the production scheduling serves as a guide for the production of the orders within the production facility. Modern production or manufacturing facilities typically require production scheduling and scheduling in advance to deliver orders on time and manage production resources efficiently. The problem of production scheduling is a computationally expensive problem and has also been categorized as a non-deterministic polynomial-time (NP)-Hard problem. Typically, the production plan or schedule is determined for a time period that may range from as small as a day (or even hour(s) of a day) as to large as a year (or years).

Many software(s) and/or system(s) are present in the market that can automatically generate the production plan or schedule for the production of the set of orders. These software(s) and/or system(s) generally take a set of orders, a set of production slots, and/or a set of production-related constraints as input and provide the production plan as output. The software or system may not always provide the most optimal production plan or schedule. In execution phase, unforeseen issues may arise that may disrupt the overall production plan. Some of such issues may include, for example, production line failure, order cancellations, an unexpected surge in the orders, a reduction in production capacity for a day or a period, a priority escalation (such as the customer may want order 1 week earlier or else will cancel the order), and the like. Conventionally, production plans have to revised whenever such issues occur to minimize any loss associated with further delay in production. In addition, as the scale of the problem increases, the accuracy of the solution of conventional software(s)/system(s) decreases. The scale increases the number of variables and the size of the solution space, from which the solution may be determined.

In order to address such unforeseen issues or the scale issue, the present disclosure may rely on specialized optimization solver machines, such as Ising processing units, to determine the schedule for production. The disclosed system may be configured to solve the production scheduling problems in which the count of the variables in the corresponding QUBO formulation may be greater than a threshold. The disclosed system may generate multiple hierarchical subproblems (or coarse problems). Each subproblem may correspond to a task of assigning the set of orders to an interval. The size of the interval (also referred to as an interval size) may be gradually reduced as each subproblem is solved. For example, a production scheduling problem may be divided into three subproblems. The interval size of the first subproblem, the second subproblem, and the third subproblem may be a month, a day, and a production slot, respectively. At first, the first subproblem may be solved to assign the set of orders to a set of months (i.e. intervals). Once the assignment is done, the second subproblem may be solved to assign the orders to a set of days within assigned months. Thereafter, the third subproblem may be solved to assign the orders to production slots within the assigned days. By gradually reducing the interval size for assignment, the process of coarsening may help to reduce the solution space for each subproblem and to search for an optimal or near optimal solution of the problem of production scheduling in a tractable amount of time.

In an embodiment, the disclosed system may be able to solve each of the multiple subproblems based on a heuristic technique. The heuristics technique may generate the production scheduling schedule quickly as compared to the optimization solver machine, but the production scheduling schedule may be less optimized in comparison to the production scheduling schedule generated by the optimization solver machine. The disclosed system may allow a user to select one of the heuristic technique or a QUBO/Ising technique for generating the production plan or schedule.

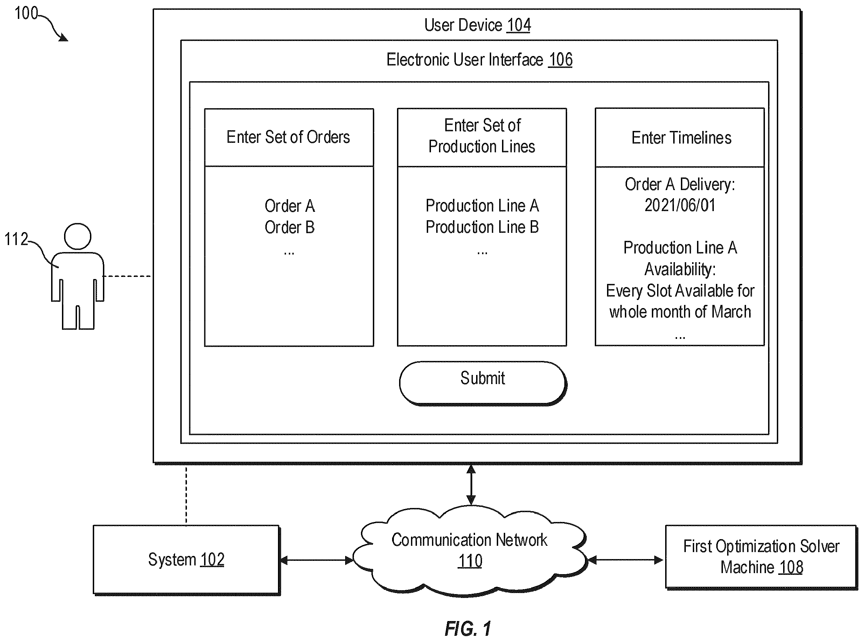

FIG. 1 is a diagram representing an exemplary network environment for multilevel method for production scheduling using optimization solver machines, arranged in accordance with at least one embodiment described in the present disclosure. With reference to FIG. 1, there is shown a network environment 100. The network environment 100 includes a system 102, a display device 104, an electronic User Interface (UI) 106 of the display device 104, and a first optimization solver machine 108. The system 102, the display device 104, and the first optimization solver machine 108 may be communicatively coupled to each other, via a communication network 110. There is further shown a user 112 who may be associated with the display device 104.

The system 102 may be a part of an on-premise or cloud computing environment associated with the user 112. The system 102 may include suitable logic, circuitry, and interfaces that may be configured to display a set of templates onto the electronic UI 106 of the display device 104. Each of such templates may include user-selectable options through which the user 112 may provide one or more input(s) to the system 102. Such inputs may be related to various parameters and constraints, which may be required to compose and solve an optimization problem on production scheduling.

In one or more embodiments, the system 102 may include the display device 104 as part of the on-premise computing environment. The display device 104 may include suitable logic, circuitry, interfaces, and/or code that may be configured to render the electronic UI 106 onto a display screen of the display device 104. In one or more embodiments, multiple user inputs from a user (such as the user 112) may be received via the display device 104. In an embodiment, the display device 104 may include a suitable network interface to communicate with the first optimization solver machine 108 that may be a part of an on-premise infrastructure or may be hosted on a cloud system (public, private, or hybrid), a FOG computing system, or an edge computing system.

The display device 104 may be realized through several known technologies such as, but not limited to, a Liquid Crystal Display (LCD) display, a Light Emitting Diode (LED) display, a plasma display, and/or an Organic LED (OLED) display technology, and/or other display technologies. Additionally, in some embodiments, the display device 104 may refer to a display screen of smart-glass device, a 3D display, a see-through display, a projection-based display, an electro-chromic display, and/or a transparent display.

The electronic UI 106 may be displayed on the display device 104 to allow the user 112 to configure a constrained optimization problem, such as a production scheduling problem. In an embodiment, the system 102 may receive one or more input(s) via the displayed set of templates. For example, the system 102 may receive a set on inputs that may include a first input, a second input, and a third input via a first template, a second template, and a third template, respectively, of the displayed set of templates.

The first input may be associated with a set of orders for production at a production facility or multiple production facilities. In some embodiments, the first input may include one or more attributes associated with each of the set of orders and an order quantity for the set of orders. For example, the first input may include an order type, a quantity of each type of product in the order, and the like. For instance, if the production facility is a vehicle manufacturing plant, then the order type may specify a vehicle model and/or a paint color associated with a particular order of vehicles.

The second input may be associated with a set of production lines of the production facility to be used for the production of the set of orders. For example, the second input may specify the number of production lines available at the production facility (or multiple production facilities). A production line may include a set of production slots, each of which may be used to produce a specific order. Typically, operations hours of a production line are divided into discrete timeslots, each of which may be referred to as a production slot. For example, if a production line operates for 12 hours a day and include 12 production slots, then each of the 12 production slots may correspond to a duration of 1 hour. In some embodiments, the second input may further include information associated with a set of production slots in each of the set of production lines. For example, the second input may include a number of production slots and a duration of each production slot.

The third input may be associated with timelines for the production of the set of orders. The third input may include first information associated with a day-wise availability of each of the set of production lines and second information associated with a set of delivery dates associated with the set of orders. The set of delivery dates associated with the set of orders may include, for example, a fulfilment date, an earliest fulfilment date, a delivery date, a shipping date, an earliest shipping date, a start date, an earliest allowed start date, and the like. In an embodiment, the first information may include a slot-wise availability of each of the set of production lines.

In an embodiment, a fourth input may be received. The fourth input may be associated with a selection of a set of constraints that may be associated with the production of the set of orders. The set of constraints may include one or more first constraints, one or more second constraints, and one or more third constraints. Each of the set of constraints may be applicable on an objective associated with the problem of production scheduling. For example, the objective may require minimization of a total warning level (or cumulative penalty) associated with violation of the set of constraints. Each constraint may act over a time window. For each time window, a constraint may be determined to be violated or satisfied. Violation of constraints may signify different risk levels or penalties.

In an embodiment, the set of constraints may include hard constraints and soft constraints. The hard constraints must be enforced while solving the problem of production scheduling. For example, the hard constraints may enforce each production slot to be assigned at most one order, each order to be assigned to exactly one production slot in a production line, each order to be assigned to a specific production line, and each order to be assigned to the specific production line on a specific day.

In an embodiment, the fourth input may include information associated with several soft constraints, such as a first constraint, a second constraint, a third constraint, a fourth constraint, a fifth constraint, or a sixth constraint. The first constraint (MaxInDay) may determine a first maximum number of orders producible in a day without incurring a first penalty. The second constraint (MaxInBucket) may determine a second maximum number of orders producible within a production bucket without incurring a second penalty. Here, a production bucket may correspond to a defined time period, such as a day, a week, a month, or any other period in which the production may take place. The production bucket may vary based on the problem. The third constraint (StartDate) may determine an earliest start date of the production without incurring a third penalty. The fourth constraint (EndDate) may determine a latest end date of the production without incurring a fourth penalty. The fifth constraint (NinM) may determine a maximum of a first number of orders (N) producible in a first number of sequential production slots (M) without incurring a fifth penalty. The sixth constraint (Skip) may determine a minimum number of unoccupied production slots between a pair of occupied production slots without incurring a sixth penalty.

Based on received set of inputs, the system 102 may be configured to initialize each of a set of intervals to be used for scheduling of the production. The set of intervals may be initialized based on a first interval size that may be greater than a size of the production slot. By way of example, and not limitation, if the size of production slot is 30 minutes, then the first interval size may be a week, a month, or a year. The interval size may be based on a size of the production scheduling problem. For instance, if the scheduling of orders for production is to be done for a yearlong period, then the first interval size may be set as a month.

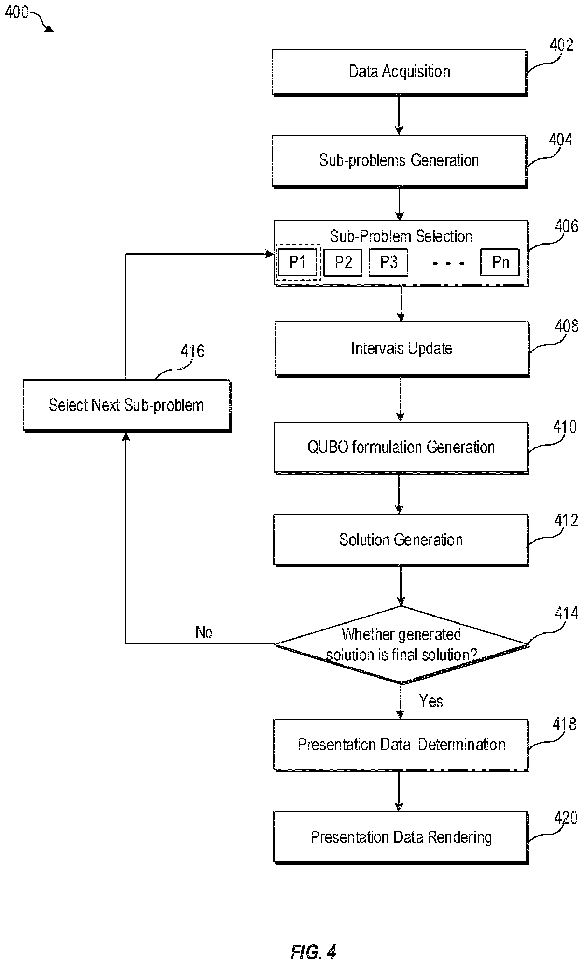

The system 102 may generate a first Quadratic Unconstrained Binary Optimization (QUBO) formulation based on the initialized set of intervals, the received set of inputs, and the one or more first constraints associated with the scheduling. The one or more first constraints may include, for example, a constraint on start/end dates of production and the MaxInBucket constraint, if the first interval size is a month. The first QUBO formulation may be a compatible input format for the first optimization solver machine 108 and may include a square matrix (Q, a positive definite matrix) of constants. The value of the square matrix (Q) may depend on an objective associated with the production scheduling and the one or more first constraints on the objective. In some embodiments, the first QUBO formulation may consider penalty terms and slack variables. Such terms and variables may be considered before calculating the square matrix (Q) of the first QUBO formulation. Details about generation of the QUBO formulation are provided, for example, in FIG. 4.

The generated first QUBO formulation may be solved on the first optimization solver machine 108. The system 102 may submit the first QUBO formulation via one or more application programming interface (API) calls to the first optimization solver machine 108. These API calls may be used to deliver a request from the system 102 to the first optimization solver machine 108 and then relay a response to the request back from the first optimization solver machine 108 to the system 102. The first optimization solver machine 108 may receive the first QUBO formulation and may compute a first solution of the first QUBO formulation by using optimization solving methods, such as quantum annealing or simulated annealing.

In one or more embodiments, the first optimization solver machine 108 may be implemented as a generalized quantum computing device on a cloud-based optimization system. The cloud-based optimization system may be implemented as one of a private cloud, a public cloud, or a hybrid cloud. In such an implementation, the generalized quantum computing device may use specialized optimization solving software applications (e.g., a QUBO solver) at an application layer to implement searching algorithms or meta-heuristic algorithms, such as simulated annealing or quantum annealing, to search for the first solution of the QUBO formulation from a discrete solution space of Boolean values (0 or 1).

The generalized quantum computing device may be different from a digital bit-based computing device, such as digital devices that are based on transistor-based digital circuits. The generalized quantum computing device may include one or more quantum gates that use quantum bits (hereinafter referred to as "qubits") to perform computations for different information processing applications, such as quantum annealing computations for solving the production scheduling problem. In general, a qubit can represent "0", "1", or a superposition of both "0" and "1". In most cases, the generalized quantum computing device may need a carefully controlled cryogenic environment to function properly. The generalized quantum computing device uses certain properties found in quantum mechanical systems, such as quantum fluctuations, quantum superposition of its Eigenstates, quantum tunneling, and quantum entanglement. These properties may help the generalized quantum computing device to perform computations for solving certain mathematical problems (e.g. QUBO) which are computationally intractable by conventional computing devices. Examples of the generalized quantum computing device may include, but are not limited to, a silicon-based nuclear spin quantum computer, a trapped ion quantum computer, a cavity quantum-electrodynamics (QED) computer, a quantum computer based on nuclear spins, a quantum computer based on electron spins in quantum dots, a superconducting quantum computer that uses superconducting loops and Josephson junctions, and nuclear magnetic resonance quantum computer.

In some embodiments, the first optimization solver machine 108 may be a quantum annealing computer that may be specifically designed and hardware/software optimized to implement searching algorithms or meta-heuristic algorithms, such as simulated annealing or quantum annealing. Similar to the generalized quantum computing device, the quantum annealing computer may also use qubits and may require a carefully controlled cryogenic environment to function properly.

In some other embodiments, the first optimization solver machine 108 may correspond to a digital quantum-computing processor for solving production scheduling problems, which may be submitted in the form of the QUBO formulation or an Ising formulation (e.g., after a conversion from QUBO to Ising). More specifically, the first optimization solver machine 108 may be a digital annealer that may be based on a semiconductor-based architecture. The digital annealer may be designed to model the functionality of the quantum annealing computer on a digital circuitry. The digital annealer may operate at room temperature and may not require cryogenic environment to function. Also, the digital annealer may have a specific form factor that may allow it to fit on a circuit board that may be small enough to slide into the rack of a computing device or a computing infrastructure, such as a data center. In an embodiment, the digital annealer may include, for example, Ising Processing Units, to solve the Ising formulation. The Ising formulation may be obtained after conversion of the generated first QUBO formulation to Ising formulation. Methods to perform such a conversion are well known in the art and therefore, details of such methods are omitted from the disclosure for the sake of brevity.

In some other embodiments, the first optimization solver machine 108 may include a processor to execute software instructions associated with one or more searching algorithms and/or meta-heuristic algorithms, such as simulated annealing or quantum annealing. Examples of the implementation of the processor may include, but are not limited to, a Reduced Instruction Set Computing (RISC) processor, an Application-Specific Integrated Circuit (ASIC) processor, a Complex Instruction Set Computing (CISC) processor, a Graphical Processing Unit (GPU), a Co-processor, and/or a combination thereof.

The first optimization solver machine 108 may transmit the computed first solution of the submitted first QUBO formulation to the system 102. The system 102 may receive the first solution from the first optimization solver machine 108. After receiving the first solution, the system 102 may be further configured to update each of the initialized set of intervals based on a second interval size. The second interval size may be less than the first size interval. In an embodiment, the second size interval size may be equal to the size of the production slot. The system 102 may be further configured to generate a second QUBO formulation based on the updated set of intervals, the first solution, and one or more second constraints associated with the scheduling. If the second interval size is equal to a production slot, then the one or more second constraints may include, for example, a NinM constraint (which sets a maximum of orders (N) producible in sequential production slots (M) without incurring a penalty) and a skip constraint (which sets a minimum number of unoccupied production slots between a pair of occupied production slots without incurring a penalty). In an embodiment, the second QUBO formulation may encode the one or more second constraints in a QUBO format.

The system 102 may be further configured to solve the generated second QUBO formulation on the first optimization solver machine 108 to generate a second solution. A schedule to be used for the production of the set of orders on the set of production lines may be determined based on the received generated solution. In an embodiment, the system 102 may display the determined schedule on the display device 104. For example, the determined schedule may be displayed on the electronic UI 106 of the display device 104 or may be committed to a database on the display device 104.

It should be noted that the communication among the system 102, the display device 104, and the first optimization solver machine 108 may be performed via the communication network 110. The communication network 110 may include a communication medium through which the system 102 may communicate with the first optimization solver machine 108, and different servers (not shown). Examples of the communication network 110 may include, but are not limited to, the Internet, a cloud network, a Wireless Fidelity (Wi-Fi) network, a Personal Area Network (PAN), a Local Area Network (LAN), and/or a Metropolitan Area Network (MAN).

Various devices in the network environment 100 may be configured to connect to the communication network 110, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

Modifications, additions, or omissions may be made to the system 102 without departing from the scope of the present disclosure. For example, in some embodiments, the system 102 may include any number of other components that may not be explicitly illustrated or described.

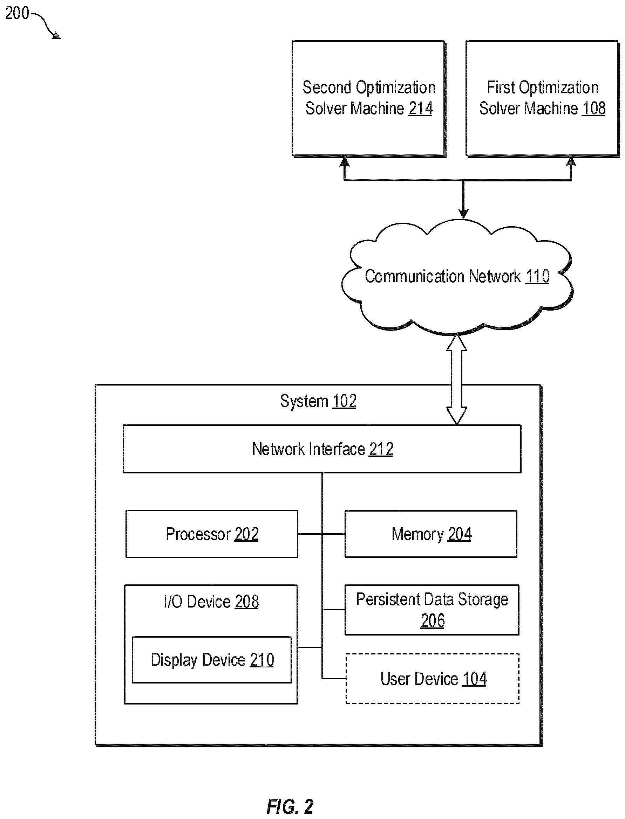

FIG. 2 is a block diagram of a system for multilevel method for production scheduling using optimization solver machines, according to at least one embodiment of the disclosure. FIG. 2 is explained in conjunction with elements from FIG. 1. With reference to FIG. 2, there is shown a block diagram 200 of the system 102. The system 102 may include a processor 202, a memory 204, and a persistent data storage 206. In some embodiments, the system 102 may also include an input/output (I/O) device 208 that may include a network interface 210 and the display device 104. There is further shown the first optimization solver machine 108 and a second optimization solver machine 212 that may be communicatively coupled to the system 102.

The processor 202 may include suitable logic, circuitry, and/or interfaces that may be configured to execute program instructions associated with different operations to be executed by the system 102. The processor 202 may include any suitable special-purpose or general-purpose computer, computing entity, or processing device including various computer hardware or software modules and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 2, the processor 202 may include any number of processors configured to, individually or collectively, perform or direct performance of any number of operations of the system 102, as described in the present disclosure.

In some embodiments, the processor 202 may be configured to interpret and/or execute program instructions and/or process data stored in the memory 204 and/or the persistent data storage 206. In some embodiments, the processor 202 may fetch program instructions from the persistent data storage 206 and load the program instructions in the memory 204. After the program instructions are loaded into memory 204, the processor 202 may execute the program instructions. Some of the examples of the processor 202 may be a GPU, a CPU, a RISC processor, an ASIC processor, a CISC processor, a co-processor, and/or a combination thereof.

The memory 204 may include suitable logic, circuitry, and/or interfaces that may be configured to store program instructions executable by the processor 202. In certain embodiments, the memory 204 may be configured to store inputs from the user 112 and information associated with any intermediate or final solution to the problem of production scheduling. The memory 204 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The persistent data storage 206 may include suitable logic, circuitry, and/or interfaces that may be configured to store program instructions executable by the processor 202, operating systems, and/or application-specific information, such as logs and application-specific databases. The persistent data storage 206 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The I/O device 208 may include suitable logic, circuitry, interfaces, and/or code that may be configured to receive inputs from the user 112. The I/O device 208 may be further configured to display the determined schedule and a total warning level on the display device 104. The I/O device 208 may include various input and output devices, which may be configured to communicate with the processor 202 and other components, such as the network interface 210. Examples of the input devices may include, but are not limited to, a touch screen, a keyboard, a mouse, a joystick, and/or a microphone. Examples of the output devices may include, but are not limited to, a display (such as the display device 104) and a speaker.

The second optimization solver machine 212 machine may include the set of Ising processing units that may be configured to solve an Ising formulation(s). In one or more embodiments, each Ising processing unit may be a software module or hardware-based device (such as a digital annealer) that may be configured to run on the second optimization solver machine 212. Each Ising processing unit may correspond to a mathematical abstraction of an Ising model for solving the Ising formulation. The Ising model may be a mathematical model concerned with the physics of phase transitions, which occur when a small change in a parameter causes a large-scale, qualitative change in the state of a system. The properties of a magnetic material may be determined by magnetic spins, which can be oriented up (+1) or down (-1). The Ising model may be expressed in terms of the individual spin states (+1/-1), the interaction coefficients that represent the strength of the intersections between different pairs of spin states, and the external magnetic coefficients that represent the strength of the external magnetic field. Therefore, a solution of the Ising formulation may be analogous to spin states for a minimum energy configuration of the Ising model.

The set of Ising Processing Units may be configured to solve the Ising formulation by searching for values of binary decision variables (+1/-1) of the Ising formulation from a discrete solution space such that the energy (analogous to energy of the Ising Model) of the Ising formulation is a minimum.

The network interface 210 may include suitable logic, circuitry, interfaces, and/or code that may be configured to establish a communication between the system 102, the display device 104, the first optimization solver machine 108, and the second optimization solver machine 212, via the communication network 110. The network interface 210 may be implemented by use of various known technologies to support wired or wireless communication of the system 102 via the communication network 110. The network interface 210 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

The network interface 210 may communicate via wireless communication with networks, such as the Internet, an Intranet, and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), Long Term Evolution (LTE), code division multiple access (CDMA), time division multiple access (TDMA), Bluetooth, Wireless Fidelity (Wi-Fi) (such as IEEE 802.11a, IEEE 802.11b, IEEE 802.11g and/or IEEE 802.11n), voice over Internet Protocol (VoIP), light fidelity (Li-Fi), or Wi-MAX.

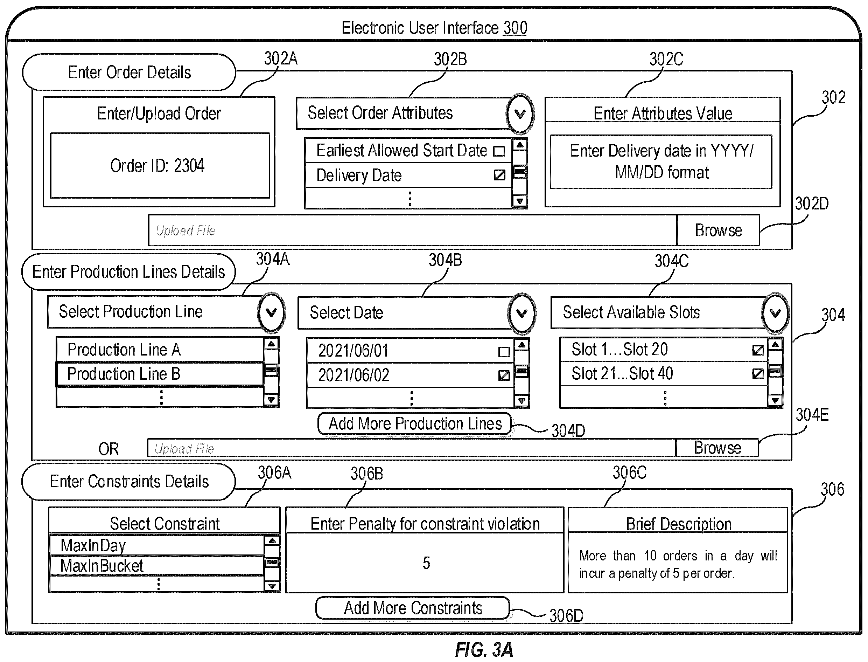

The functions or operations executed by the system 102, as described in FIG. 1, may be performed by the processor 202. Operations executed by the processor 202 are described in detail, for example, in FIGs. 3A, FIG. 3B, FIG. 4, FIG. 5, and FIG. 6.

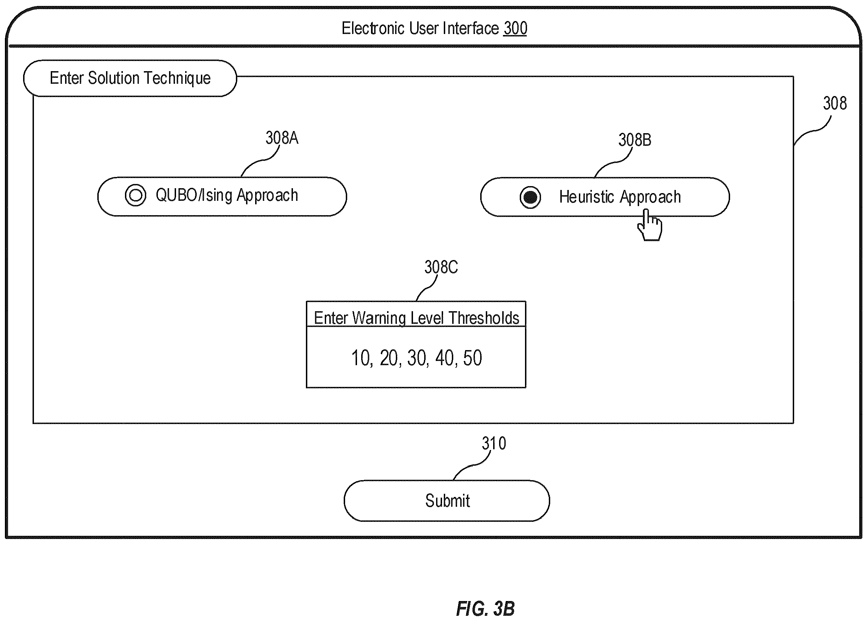

FIGs. 3A and 3B, collectively, illustrate an example electronic user interface (UI) for providing input(s) for multilevel method production scheduling using optimization solver machines, according to at least one embodiment described in the present disclosure. FIGs. 3A and 3B are explained in conjunction with elements from FIG. 1 and FIG. 2. With reference to FIGs. 3A and 3B, there is shown an electronic UI 300, which may be an example implementation of the electronic UI 106 of FIG. 1. The electronic UI 300 may be displayed on the display device 104 based on a user request, which may be received via an application interface displayed onto a display screen of the display device 104. The application interface may be part of an application software, for example, a software development kit (SDK), a cloud server-based application, a web-based application, an OS-based application/application suite, an enterprise application, a mobile application, and the like.

On the electronic UI 300, there is shown a set of UI elements, such as a first UI element 302, a second UI element 304, a third UI element 306, a fourth UI element 308, and a fifth UI element 310. In FIG. 3A, the first UI element 302 is labelled as, for example, "Enter Order Details". The first UI element 302 may include an order textbox 302A, an order attributes menu 302B, an attribute value textbox 302C, and/or a browse button 302D. Through the order textbox 302A, the order attributes menu 302B, the attribute value textbox 302C, or the browse button 302D, the system 102 may receive the first input associated with the set of orders for production at the production facility and the third input associated with timelines for the production. Specifically, through the attribute value textbox 302C and/or a browse button 302D, the system 102 may receive the third input associated with a set of delivery dates associated with the set of orders.

The order textbox 302A may be a textbox where the user 112 may add information about the set of orders for production in a defined format. The set of orders may have to be produced at the production facility at a future time (say in upcoming week(s), month(s), or year(s)). The order information in the order textbox 302A may include, for example, an order identifier and an order description.

The order attributes menu 302B may be a drop-down menu that may display multiple attribute options, each of which may be associated with one of the set of orders, an order quantity, and a fulfilment schedule for the set of orders. The order attributes menu 302B may allow the user 112 to select one or more attributes options, for example, via checkboxes. In one or more embodiments, the drop-down list of the order attributes menu 302B may be populated with attributes associated with each of the set of orders, the order quantity, and the fulfilment schedule for the set of orders.

By way of example, and not limitation, if the set of orders is of vehicles to be produced, then the attributes associated with the set of orders may include a duty classification, a vehicle type, an engine type, a vehicle colour, and the like. The order quantity may include the number of vehicles to be produced. In some cases, multiple order quantities may be specified according to different attributes. For example, in case of a color attribute, different quantities, such as five blue vehicles and 10 black vehicles may be specified for both blue and black colors. Similarly, the fulfilment schedule may include a delivery date, a completion date, an earliest completion date, a start date, an earlies allowed start date, and the like associated with the corresponding set of order.

The attribute value textbox 302C may be a textbox where the user 112 may provide values for each selected attribute option in a particular format. For example, if a delivery date is selected via the order attributes menu 302B, then the user 112 may enter the delivery date via the attribute value textbox 302C in a particular format (say in "YYYY/MM/DD" format).

In one or more embodiments, instead of providing the order information via the order textbox 302A, selecting the attribute options via the order attributes menu 302B, and providing the values for selected options via the attribute value textbox 302C, all the information associated with the set of orders and associated attributes (along with their respective values) may be combined within a single file or multiple files. Such file(s) may be uploaded to the system 102, via the browse button 302D of the electronic UI 300. Such file(s) may be in a particular format, such as a spreadsheet, a comma separated values (CSV) file, a JavaScript Object Notation (JSON), Extensible Markup Language (XML), or any other suitable format.

The system 102 may be configured to retrieve the information about the set of order and associated attributes along with their attribute values from the uploaded file(s). Example of the retrieved information for vehicle production is presented in Table 1, as follows:

Table 1: Set of Orders with Attributes

| Duty Classification | Vehicle Type | Quantity | Engine Type | Color | Has Stereo? | Earliest Allowed Start date | Delivery Date |
|---|---|---|---|---|---|---|---|
| Light | Coupe | 31 | Petrol | Red | Yes | 2021/07/01 | 2022/07/01 |
| Light | Sedan | 44 | Diesel | White | Yes | 2021/07/01 | 2022/07/01 |
| Light | Sedan | 12 | Petrol | Blue | Yes | 2021/07/01 | 2022/07/01 |
| Medium | Truck | 13 | Diesel | Black | Yes | 2021/07/15 | 2022/07/15 |
| Medium | Truck | 8 | Diesel | Blue | No | 2021/09/20 | 2022/09/20 |
| Heavy | SemiTrailer | 6 | Diesel | Black | No | 2021/12/01 | 2022/12/01 |
| Heavy | Trailer | 5 | Diesel | Black | Yes | 2022/10/01 | 2024/10/01 |

Data in Table 1 is merely provided as an example and should not be construed as limiting the disclosure. The second UI element 304 may be labelled as, for example, "Enter Production Lines Details" and may include a production line menu 304A, a date menu 304B, a slot menu 304C, and/or add more production line(s) button 304D, and/or a browse button 304E. Through the production line menu 304A, the date menu 304B, the slot menu 304C, and/or the add more production line(s) button 304D, and/or a browse button 304E, the user 112 may provide the second input and the first information included in the third input to the system 102. Specifically, the system 102 may receive the second input associated with the set of production lines of the production facility to be used for the production of the set of orders via the the production line menu 304A, the add more production line(s) button 304D, and/or a browse button 304E. The system 102 may receive the first information (which may be included in the third input associated with timelines for the production) via the the date menu 304B, and the slot menu 304C, and/or the add more production line(s) button 304D, and/or a browse button 304E.

The production line menu 304A may be a drop-down menu, which may list a set of production lines that may be available in the production facility. Through the production line menu 304A, a number of production lines may be selected for production of the set of orders. Each production line may include a set of production slots. Each of such slots may be assigned at most one order during the production scheduling. For example, if the production facility has six production lines, then all the six production lines may be displayed into the drop-down menu.

The date menu 304B may be a drop-down menu that may display multiple dates. The date menu 304B may allow the user 112 to select one or more dates, for example, via checkboxes. The selected one or more dates may specify the day-wise availability of each of the set of production lines for production of the set of orders. In one or more embodiments, the selection of one or more dates via the date menu 304B may be referred as the first information of the third input associated with a day-wise availability of each of the set of production lines.

The slot menu 304C may be a drop-down menu that may display multiple production slots for each selection of a production line. Through the slot menu 304C, the system 102 may receive first information associated with a set of production slots in each of the set of production lines. The slot menu 304C may allow the user 112 to select production slots, for example, via checkboxes. For each production line, the selected production slots may be available for production of the set of orders.

In some scenarios, the user 112 may be provided with options to add another production line by clicking on the add more production line(s) button 304D. Upon selection of the add more production line(s) button 304D, the system 102 may display a new UI element, which may be similar to the second UI element 304. The user 112 may be again provided with options to add more production lines, select dates to indicate day-wise availability of such production lines, and indicate slots available in the added production lines.

In one or more embodiments, instead of selection of the production line via the production line menu 304A, selection of the one or more dates via the date menu 304B, selection of slots via the slot menu 304C, and/or addition of more production line(s) via the add more production line(s) button 304D, all the information about the production lines and associated dates and slots may be combined within a single file and may be uploaded on the electronic UI 300 via the browse button 304E. The file may be in a defined format, such as spreadsheet or a CSV file. The system 102 may be configured to retrieve the second input, i.e. the information about the set of order and associated attributes along with their attribute values from the uploaded file. Example of such information is presented in Table 2, as follows:

Table 2: Set of Production lines with dates and slots

| Production line | Date & Time | Slot Availability | Slot Interval |
|---|---|---|---|
| Production line A Production line B | 2021/06/01, 06:00:00 - 18:00:00 | Slot 1...Slot 40 | 1 Hour |
| Production line B | 2020/06/02 06:00:00 - 18:00:00 | Slot 1...Slot 40 | 1 Hour |
| Production line A | 2020/06/03 06:00:00 - 18:00:00 | Slot 21...Slot 40 | 1 Hour |
| Production line A Production line B | 2020/06/04 06:00:00 - 18:00:00 | Slot 1...Slot 40 | 1 Hour |
| Production line A | 2020/06/05 06:00:00 - 12:00:00 | Slot 1...Slot 20 | 1 Hour |
| ... | ... | ... | ... |

Data in Table 2 is merely provided as an example and should not be construed as limiting for the disclosure.

The third UI element 306 may be labelled as, for example, "Enter Constraint Details". The third UI element 306 may include a constraint selection menu 306A, a penalty selection textbox 306B, and a description label 306C. Through the constraint selection menu 306A, the penalty selection textbox 306B, and the description label 306C, the system 102 may receive the fourth input associated with a selection of set of constraints associated with the production.

The constraint selection menu 306A may be a menu from where the user 112 may specify or select the set of constraints for the production scheduling. In some cases, the user 112 may write a name of the constraint and the system 102 may determine the constraint associated with the name. The penalty selection textbox 306B may be a textbox through which the user 112 may specify a penalty applicable when a constraint (selected via the constraint selection menu 306A) is violated.

The description label 306C may be a textbox through which the user 112 may view a brief description of the constraint (selected via the constraint selection menu 306A) for the production scheduling. In some cases, the user 112 may input a multiple penalty values, each of which may be applicable if a parameter/variable of the constraint takes on a specific value within a range. Details associated with the set of constraints are provided in FIG. 1 and FIG. 4, for example. The user 112 may be provided with options to add another constraint by clicking on the add more constraint(s) button 306D. Upon selection of the add more constraint(s) button 306D, the system 102 may display a UI element, which may be similar to the third UI element 306. The user 112 may be again provided with options to select another constraint, specify a penalty for constraint violation, and view a brief description of the selected constraint.

In FIG. 3B, there is shown the fourth UI element 308 may be labelled as, for example, "Enter Solution Technique". The fourth UI element 308 may include a first radio button 308A and a second radio button 308B. Through the first radio button 308A or the second radio button 308B, the system 102 may receive a fifth input associated with the technique to be used to determine the schedule for the production of the set of orders.

The first radio button 308A may be associated with solving the production scheduling problems using a QUBO/Ising approach. In the QUBO/Ising, one or more QUBO or Ising formulations of the subproblems may be created and solved using optimization solver machines such as the first optimization solver machine 108 or the second optimization solver machine 212.

The second radio button 308B may be associated with solving the production scheduling problem using a heuristic approach. In the heuristic approach, the system 102 may use a heuristics method for solving the production scheduling problem.

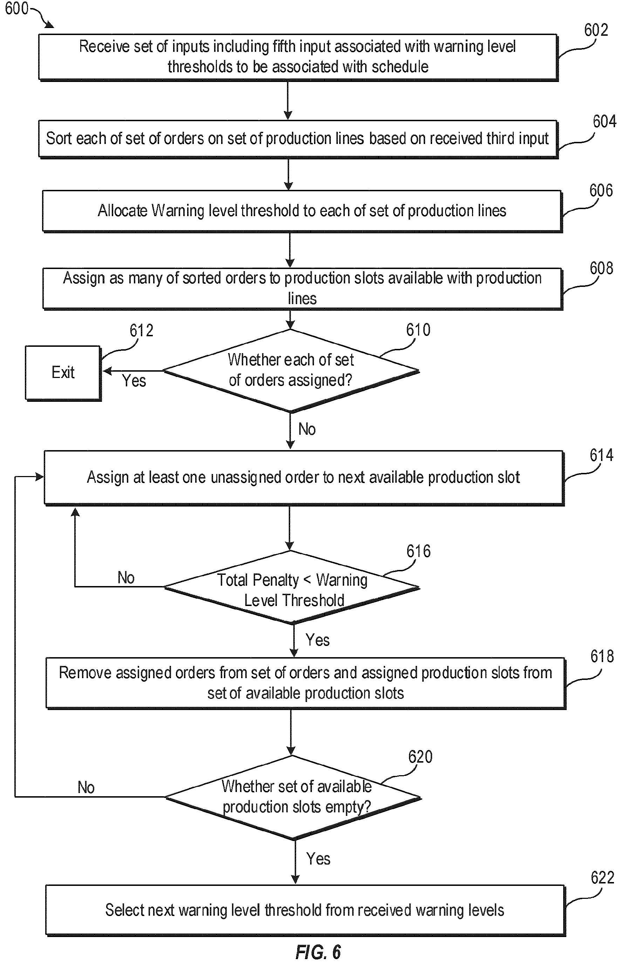

It should be noted that only one technique may be selectable in the fourth UI element 308. In case of selection of the second radio button 308B, a warning level threshold textbox 308C may be displayed. The warning level threshold textbox 308C may be a textbox through which the user 112 may specify warning level thresholds to be associated with the schedule. Details about the heuristic technique and warning level threshold are provided, for example, in FIG. 6.

It should be further noted that reception of the fifth input may not be mandatory. In case the third input is not received, the QUBO/Ising approach may be selected by default.

The fifth UI element 310 may be labelled as, for example, "Submit" and may be a button. Upon a selection of the button, the system 102 may determine the schedule or a heuristic schedule to be used for the production of the set of orders. The schedule may be determined using QUBO/Ising approach if the first radio button 308A at the fourth UI element 308 is selected and the schedule may be determined using the heuristic approach if the second radio button 308B at the fourth UI element 308 is selected. The schedule may include an allocation of each of the set of orders to a corresponding production slot of one of the set of production lines.

It should be noted that the UI/UI elements in the electronic UI 300 are merely provided as an example and should not be construed as limiting the present disclosure. In some embodiments, the electronic UI 300 may be suitably modified to allow the user 112 to enter or upload information associated with the first input, the second input, the third input, the fourth input, and the fifth input.

FIG. 4 is a flowchart of a generalized multilevel method for production scheduling using optimization solver machines, arranged in accordance with at least one embodiment described in the present disclosure. FIG. 4 is explained in conjunction with elements from FIG. 1, FIG. 2, FIG. 3A, and FIG. 3B. With reference to FIG. 4, there is shown a flowchart 400. The example method illustrated in the flowchart 400 may start at 402 and may be performed by any suitable system, apparatus, or device, such as by the system 102 of FIG. 2.

At 402, data acquisition may be performed. As part of such acquisition, the system 102 may receive, via the display device 104, a set of inputs which includes a first input, a second input, a third input, and a fourth input. Such inputs may be manually entered by the user 112 or may be extracted from file(s) uploaded on the system 102, via the display device 104 as described in FIG. 3A and 3B.

The first input may be associated with the set of orders to be produced at a production facility (or multiple production facilities) and may be received, for example, via the first UI element 302 of FIG. 3A. Examples of the production facility may include, but are not limited to, a manufacturing plant, an assembly plant, a production factory, a fabrication unit (such as a chip fab), or a product sorting unit. The first input may include one or more of attributes that may be associated with each order and a quantity of the set of orders.

The second input may be associated with a set of production lines of the production facility to be used for the production of the set of orders and may be received, for example, via the second UI element 304 of FIG. 3A. The second input may include information associated with a set of production slots in each of the set of production lines.

The third input may be associated with timelines for the production for the production of the set of orders and may be received, for example, via the first UI element 302 and the second UI element 304 collectively. The third input may include first information associated with a day-wise availability of each of the set of production lines until a future date and second information associated with a fulfilment schedule (specifically delivery date) associated with the set of orders. The future date may correspond to a date until which the schedule has to be determined.

The fourth input may be associated with a selection of a set of constraints associated with the production and may be received, for example, via the third UI element 306 of FIG. 3A. The set of constraints may include hard constraints and soft constraints. The hard constraints must be enforced while solving the problem of production scheduling. For example, such hard constraints may include a constraint that ensures each slot is assigned at most one order, a constraint that ensures each order is assigned to exactly one production slot, and a constraint that ensures each order is assigned to a single production line.

In an embodiment, the soft constraints may include a first constraint, a second constraint, a third constraint, a fourth constraint, a fifth constraint, or a sixth constraint. The first constraint (MaxInDay) may determine a first maximum number of orders producible in a day without incurring a first penalty. The second constraint (MaxInBucket) may determine a second maximum number of orders producible within a production bucket without incurring a second penalty. The production bucket may be a day, a week, a month or any other period. The third constraint (StartDate) may determine an earliest start date of the production without incurring a third penalty. The fourth constraint (EndDate) may determine a latest end date of the production without incurring a fourth penalty. The fifth constraint (NinM) may determine a maximum of a first number of orders (N) producible in a first number of sequential production slots (M) of a production line, without incurring a fifth penalty. The sixth constraint (Skip) may determine a minimum number of unoccupied production slots in a production line between a pair of occupied production slots, without incurring a sixth penalty.

The soft constraints may be violated by incurring penalties associated with such constraints. For example, the first constraint may be violated by incurring the first penalty, the second constraint may be violated by incurring the second penalty, the third constraint may be violated by incurring the third penalty, the fourth constraint may be violated by incurring the fourth penalty, the fifth constraint may be violated by incurring the fifth penalty, and the sixth constraint may be violated by incurring the sixth penalty. The penalty which may be applicable on violation of any of such constraints may be specified in the third input (for example, received via the third UI element 306 of FIG. 3A).

Examples of the set of constraints associated with a vehicle production problem for a given set of orders (as mentioned in Table 1) are provided herein. The first constraint may be defined as "If more than 90 vehicles are produced in a day, then the first penalty of 54 may be incurred". The second constraint may be defined as "If more than 50 vehicles are produced in a production bucket, then the second penalty of 78 may be incurred". The third constraint may be defined as "If the production of the order is not started by June-01-2021, then the third penalty of 10 may be incurred". The fourth constraint may be defined as "If the set of orders are not completed by Jan-01-2022 (the latest end date), then the fourth penalty of 99 per order may be incurred". The fifth constraint or N-in-M may be defined as "If more than 5 (N) vehicles per 10 (M) sequential slots are painted, then the fifth penalty of 18 may be incurred". Similarly, the sixth constraint or the skip constraint may be defined as "If 10 slots are not left empty per order, then the sixth penalty of 99 may be incurred".

At 404, subproblems may be generated. The system 102 may be configured to generate subproblems associated with the production scheduling problem by a process of coarsening. Each subproblem may correspond to a task of assigning the set of orders to an interval. The size of the interval (also referred to as interval size) may be gradually reduced as each subproblem is solved. For example, a production scheduling problem may be divided into three subproblems. The interval size of the first subproblem, the second subproblem, and the third subproblem may be a month, a day, and a production slot, respectively. At first, the first subproblem may be solved to assign the set of orders to a set of months (i.e. intervals). Once the assignment is done, the second subproblem may be solved to assign the orders to a set of days within assigned months. Thereafter, the third subproblem may be solved to assign the orders to production slots within the assigned days. By gradually reducing the interval size for assignment, the process of coarsening may help to reduce the solution space for each subproblem and to search for an optimal or near optimal solution of the problem of production scheduling in a tractable amount of time.

In an embodiment, the interval may be used to generalize a production slot and may be defined by a tuple (production line identifier, start_date, end_date, start_slot, end_slot). For example, slot 15, on July 2, 2021 for production line A would be represented by (A, July.2.2021, July.2.2021, 15,15). As another example, the interval for all slots (assuming 40 slots) on July 2, 2021 for production line B may be represented by (B, July.2.2021, July.2.2021, 1,40). As another example, the interval for all slots (assuming 40 slots) for a first week of July 2021 for production line C may be represented by (C, July.1.2021, July.31.2021, 1,40).

To generate the subproblems, the system 102 may be configured to estimate a count of the subproblems to be generated based on the received set of inputs. Specifically, the count of the subproblems may be estimated based on the timelines for production (such as delivery dates associated with the set of orders) and a size of production slot. Additionally, or alternatively, the count of subproblems may be estimated based on an order volume associated with the set of orders.

The system 102 may be further configured to determine a set of intervals to be used for each subproblem. Each order may be assigned to one of the set of intervals associated with the corresponding subproblem. In an embodiment, the system 102 may generate N subproblems, where N may be the estimated count. The N subproblems may include a first sub problem (P1), a second subproblem (P2), a third subproblem (P3)..., and an Nth subproblem (PN). As a first example, if the schedule is to be determined for next 1 year, and the size of the production slot is of 1 hour, then there may be three subproblems. The first interval size of each interval associated with the first subproblem (P1) may be equal to a month, the second interval size of each interval associated with the second subproblem (P2) may be equal to a day, and a third interval size of each interval associated with the third subproblem (P3) may be equal to the size of the production slot (i.e. 1 hour).

At 406, a subproblem may be selected. The system 102 may be configured to select the subproblem for generating a solution of the corresponding subproblem. In the first pass, the first subproblem (P1) may be selected (as depicted by a dotted rectangle).

At 408, each of the set of intervals to be used for scheduling of the production may be updated. In the first pass, the set of intervals may be initialized based on a first interval size. In an embodiment, the processor 202 may initialize each of the set of intervals based on the first interval size. The first interval size may be greater than a size of a production slot. With reference to the first example, if the size of the production slot is of 1 hour and the schedule is to be determined for next 1 year, then the first interval size may be equal to a month. In an embodiment, the first interval size may be based on an order volume associated with the set of orders and the timelines for the production.

At 410, a QUBO formulation may be generated. In an embodiment, the system 102 may be configured to generate a first QUBO formulation of the selected first subproblem (P1). The first QUBO formulation may be generated based on the on the initialized set of intervals (at 408), the received set of inputs (at 402), and one or more first constraints associated with the first subproblem of scheduling.

In order to generate the first QUBO formulation, the system 102 may be configured to determine a first objective function associated with the first subproblem (P1). To determine the first objective function, the system 102 may be configured to determine one or more first constraints (from the set of constraints) to be included in the determined first objective function. The first QUBO formulation may encode the one or more first constraints. The encoding of the one or more first constraints may correspond to a transformation of the one or more first constraints into a QUBO format. The QUBO format of each constraint may be added up and further encoded with the determined first objective function to generate the first QUBO formulation.

For example, the first objective function may include an objective associated with the second constraint (i.e.

MaxInBucket) of the set of constraints. The objective associated with the second constraint may be provided by equation (1), as follows:

$$\text{Min} \sum_{i=1}^{k} W_i y_i \qquad (1)$$

where,

$y_i$ may represent a decision variable that indicates that value of $b(x)$ lies between $l_{i-1}$ and $l_i$, and $y_i \in \{0,1\}$,
$W_i$ may be a constant and may represent the second penalty associated with bucket b if $l_{i-1} \leq b(x) \leq l_i$ and $W_i < W_{i+1}$,
$b(x)$ may represent the number of orders assigned to bucket b and may be expressed as a linear function and $b(x) = b(x,b) = \Sigma i_{\in 0, j \in S_b} x_{ij}$,
$x_{ij}$ may represent a decision variable for assigning order 'i' to slot 'j',
O may represent the set of orders,
$S_B$ may represent the set of buckets,
$b(x)$ may be exactly in one interval as provided by equation (2), as follows:

$$\sum_{i=1}^{k} y_i = 1 \qquad (2)$$

and $b(x)$ may be bounded as provided by equation (3), as follows:

$$\sum_{i=1}^{k} l_k y_k \geq b(x) \qquad (3)$$

The equation (3) may ensure that if the objective function is a 'minimum' function, and if $l_i \geq b(x)$ then $y_i = 1$, and $l_i$ is a constant provided in the input.

The first QUBO formulation may be a compatible input format for the first optimization solver machine 108 and may include a cost matrix (Q) of constants associated with a vector (x) of binary decision variables. A generalized QUBO form for any problem is given by equation (4), as follows:

$$\text{min} \ (y = x^T \cdot Q \cdot x) \qquad (4)$$

where,

x may represent the vector of binary decision variables,
and Q may be the cost matrix of constants.

In one or more embodiments, the system 102 may transform the first QUBO formulation into a first Ising formulation and may submit the Ising formulation to the second optimization solver machine 212. In general, an Ising formulation may be a compatible input format for a set of Ising processing units of the second optimization solver machine 212 which may be same as or different from the first optimization solver machine 108. In the Ising formulation, attributes and relationship among the attributes are based on an Ising model. The Ising model is a mathematical model of ferromagnetism in reference to statistical mechanics. The model uses discrete variables which represent the magnetic dipole moments of spin states, (which are either +1 or -1). The datapoints (which are represented as the spin states) may be organized as a lattice so each spin may interact with its neighbors.

The solution of the Ising formulation may differ from that of the QUBO formulation with respect to selection of values for the vector of binary decision variables. For the QUBO formulation, the binary value for a decision variable may be represented as one of 0 or 1. Whereas, for the Ising formulation, the binary value for a decision variable may be represented as one of -1 or +1 (which may be analogous to two spin states of an Ising system).

At 412, a solution may be generated. In the first pass, a first solution may be generated. The first solution may be generated by solving the first QUBO formulation on the first optimization solver machine 108 or by solving the first ising formulation on the second optimization solver machine 212. In an embodiment, the system 102 may submit the generated first QUBO formulation to the first optimization solver machine 108 via an application programming interface (API) call.

The first optimization solver machine 108 may solve the first QUBO formulation by application of searching methods and/or meta-heuristic methods, such as quantum annealing, to obtain a first solution of the submitted QUBO formulation. Specifically, to search for the solution (i.e. values of the vector of binary decision variables (x)), the energy of the QUBO formulation may be minimized. The solution may be optimal (or near optimal) and may be searched from a discrete solution space.

The system 102 may receive the first solution to the submitted first QUBO formulation. In an embodiment, the system 102 may receive the first solution of the submitted first QUBO formulation from the first optimization solver machine 108. The received first solution may include binary values for the vector of binary decision variables (x). In another embodiment, the system 102 may be configured to solve the first ising formulation on the second optimization solver machine 212 to generate the first solution. The first solution may include an allocation of each of the set of orders to one of the initialized (or updated) set of intervals (such as a month). An example of the allocation of the set of orders (10 orders) to a set of months (i.e. intervals) is provided by a following table:

| Month / Order | Jan | Feb | Mar | Apr | May | Jun | Jul | Aug | Sep | Oct | Nov | Dec |
|---|---|---|---|---|---|---|---|---|---|---|---|---|
| 1 | 0 | 0 | 0 | 1 | 0 | 0 | 0 | 0 | 0 | 0 | 0 | 0 |
| 2 | 0 | 0 | 0 | 0 | 0 | 1 | 0 | 0 | 0 | 0 | 0 | 0 |
| 3 | 0 | 0 | 0 | 0 | 0 | 0 | 0 | 0 | 0 | 0 | 1 | 0 |
| 4 | 0 | 0 | 0 | 0 | 0 | 0 | 1 | 0 | 0 | 0 | 0 | 0 |
| 5 | 0 | 1 | 0 | 0 | 0 | 0 | 0 | 0 | 0 | 0 | 0 | 0 |
| 6 | 0 | 0 | 0 | 0 | 1 | 0 | 0 | 0 | 0 | 0 | 0 | 0 |
| 7 | 0 | 0 | 0 | 0 | 0 | 0 | 0 | 0 | 1 | 0 | 0 | 0 |
| 8 | 0 | 0 | 0 | 0 | 0 | 0 | 0 | 0 | 1 | 0 | 0 | 0 |
| 9 | 0 | 0 | 0 | 0 | 0 | 0 | 0 | 0 | 0 | 0 | 0 | 1 |
| 10 | 0 | 0 | 0 | 0 | 0 | 0 | 0 | 1 | 0 | 0 | 0 | 0 |

Table 3: Allocation of Orders to Month-wide intervals

With reference to Table 3, the first order may be produced in the month of April, the second order may be produced in the month of June, the third order may be produced in the month of November, the fourth order may be produced in the month of July, the fifth order may be produced in the month of February, the sixth order may be produced in the month of May, the seventh order and the eighth order may be produced in the month of September, the ninth order may be produced in the month of December, and the tenth order may be produced in the August. In some embodiments, the system 102 may be configured to generate the solution of the first subproblem based on a heuristic technique. The details about the heuristic technique are provided, for example, in FIG. 6.

At 414, it may be determined whether the generated solution is a final solution. The final solution may correspond to the solution of the last subproblem. For example, if there are three subproblems, then the third subproblem may be the last subproblem and the solution of the third subproblem may be the final solution. In case the generated solution is the final solution, the control may be shifted to 418. Otherwise, the control may be shifted to 416.

At 416, next sub problem may be selected. The next sub problem may be selected from the subproblems generated at 406. The system 102 may be configured to select the second subproblem (P2). Based on the selection of the second subproblem (P2), the system 102 may be configured to update each of the initialized set of intervals based on a second interval size. If the count of subproblems is two, then the second interval size may be equal to the size of the production slot. Whereas, if the count of subproblem is three or more than three, then the second interval size may be less than the first interval size but greater than the size of the production slot.

With reference to the first example, if the first the interval size is equal to 1 month, then the second interval size may be equal to a day. Similar to the first interval size, the second interval size may be also based on the order volume associated with the set of orders and the timelines for the production. An objective of the second subproblem (P2) may be to allocate the set of orders to a set of intervals, each of which may be equal to one of a week, a day, or a production slot. If the second subproblem (P2) is the final subproblem, then each of the set of intervals may be updated to the size of the production slot. This may be done because the solution of the final subproblem may include a mapping of each order to a particular production slot. If the second subproblem (P2) is the not the final subproblem, then each of the set of intervals may be updated based on a second interval size, which may be less than the first interval size but greater than the size of the production slot.

The system 102 may be configured to generate a second QUBO formulation for the second subproblem (P2). The second QUBO formulation may be generated based on based on the updated set of intervals, the first solution, and one or more second constraints associated with the scheduling. The one or more second constraints may be encoded in the second QUBO formulation. The one or more second constraints may be different from the one or more first constraints (encoded in the first QUBO formulation).

The system 102 may be further configured to solve the generated second QUBO formulation on the first optimization solver machine 108 to generate a second solution. In an embodiment, the system 102 may be configured to transform the generated second QUBO formulation into a second Ising formulation. The system 102 may be further configured to solve the generated second ising formulation on the second optimization solver machine 212 to generate the second solution. The second solution may include an allocation of each of the set of orders to one of the updated set of intervals, such as a set of days. The set of days may be determined based on allocation of orders to the set of months (i.e. the initialized intervals). An example of the allocation of an order to one of the set of days (i.e. intervals) is provided by a following table:

| Week / Order | Monday | Tuesday | Wednesday | Thursday | Friday |
|---|---|---|---|---|---|
| 7 | 0 | 0 | 1 | 0 | 0 |

Table 4: Allocation of order to a day-sized interval

As shown in Table 4, the seventh order may be allocated for production to Wednesday of the fourth week of September. The data in Table 4 is merely an example for a specific order and should not be construed as limiting the disclosure. In generation of the second solution, it is assumed that the production facility does not operate on weekends (i.e. on Saturday and Sunday).

It may be again determined whether the generated solution is the final solution or not. If the second solution is not the final solution, the control may be again shifted to 416. The next sub problem may be selected from the subproblems generated at 406.

In an embodiment, the system 102 may be configured to select the third subproblem (P3). Based on the selection of the third subproblem (P3), the system 102 may be configured to update each of the updated set of intervals based on a third interval size. If there are only three subproblems, then the third interval size may be equal to the size of the production slot and may be less than the first interval size and the second interval size. For example, if the first interval size corresponds to a month and the second interval size corresponds to a day, then the third interval size may correspond to the size of the production slot. In such a case, the updated set of intervals may correspond to a set of production slots available within a set of days (i.e. previously updated intervals). In an embodiment, if there are more than three subproblems, then the third interval size may be less than the first interval size and the second interval size but may be greater than the size of the production slot. Similar to the first and second interval sizes, the third interval size may be based on an order volume associated with the set of orders and the timelines for the production.

The objective of the third subproblem (P3) may be to allocate the set of orders to a set of intervals, each of which may be equal to the size of the production slot, for example. The system 102 may be configured to generate a third QUBO formulation for the third subproblem (P3). The third QUBO formulation may be generated based on based on the received set of inputs, the second solution, and one or more third constraints. The one or more third constraints may be encoded in the second QUBO formulation. Also, the one or more third constraints may be different from the one or more first constraints and the one or more second constraints. In an embodiment, the system 102 may be configured to transform the generated third QUBO formulation into a third Ising formulation.

The system 102 may be further configured to solve the generated third QUBO formulation on the first optimization solver machine 108 to generate a third solution. In another embodiment, the system 102 may be configured to solve the generated second ising formulation on the second optimization solver machine to generate the third solution. In an embodiment, the third solution may include an allocation of each of the set of orders to one of the set of production slots (i.e. the updated intervals). The set of production slots may be determined based on allocation of orders to the set of days (i.e. previously updated intervals). An example of the allocation of an order (#7) to one of 12 production slots is provided in following table:

| Slot #<br>Order | 1 | 2 | 3 | 4 | 5 | 6 | 7 | 8 | 9 | 10 | 11 | 12 |
|---|---|---|---|---|---|---|---|---|---|---|---|---|
| 7 | 0 | 0 | 0 | 0 | 0 | 0 | 0 | 0 | 1 | 0 | 0 | 0 |

Table 5: Allocation of an order to Production Slots

With reference to Table 5, the seventh order may be produced on a seventh production slot of the Production line 'A' on the Wednesday of the fourth week of September. It may be noted that the third solution may include the allocation (also referred to as the schedule for the production) for each of the set of orders. The allocation for other orders has been omitted for the sake of brevity. With reference to Table 5, it is assumed that the production facility does not operate on weekends.

It may be again determined whether the generated solution is the final solution or not. Since the third solution is the final solution, the control may pass to 418. In an embodiment, the number of subproblems may be more than three. In such a case, the third solution may not be the final solution and the next sub problem may be selected from the subproblems generated at 406. Thereafter, the system 102 may be configured to execute the operations from 408 to 414 again till the last subproblem (such as the Nth subproblem ($P_N$)) is solved.

At 418, presentation data may be generated. To generate the presentation data, the system 102 may be configured to determine the schedule to be used for the production of the set of orders on the set of production lines. The schedule may be determined based on the solution of a final QUBO formulation (for example, the second QUBO formulation or the third QUBO formulation). The schedule may include the allocation of each of the set of orders to a corresponding production slot of one of the set of production lines. If the second interval size is equal to the size of the production slot, then the schedule may be determined based on the second solution. If the third interval size is equal to the size of the production slot, then the schedule may be determined based on the third solution.

The system 102 may compute a total warning level based on the determined schedule. The computed total warning level may indicate a total penalty incurred as a result of a violation of the one or more first constraints, the one or more second constraints, and/or the one or more third constraints. The generated presentation data may include both the determined schedule and the computed total warning level.

At 420, the generated presentation data may be rendered. The system 102 may be configured to display the presentation data that includes determined schedule and the computed total warning level on the display device 104. Specifically, the system 102 may display the determined schedule and the computed total warning level on the electronic UI 106 of the display device 104.

Control may pass to end. Although the flowchart 400 is illustrated as discrete operations, such as 402, 404, 406, 408, 410, 412, 414, 416, 418 and 420; however, in certain embodiments, such discrete operations may be further divided into additional operations, combined into fewer operations, or eliminated, depending on the particular implementation.

It should be noted that only three subproblems are described in the foregoing description. However, more than or less than three subproblems may be solved to determine the schedule for the production. Details about further subproblems have been omitted for the sake of brevity.

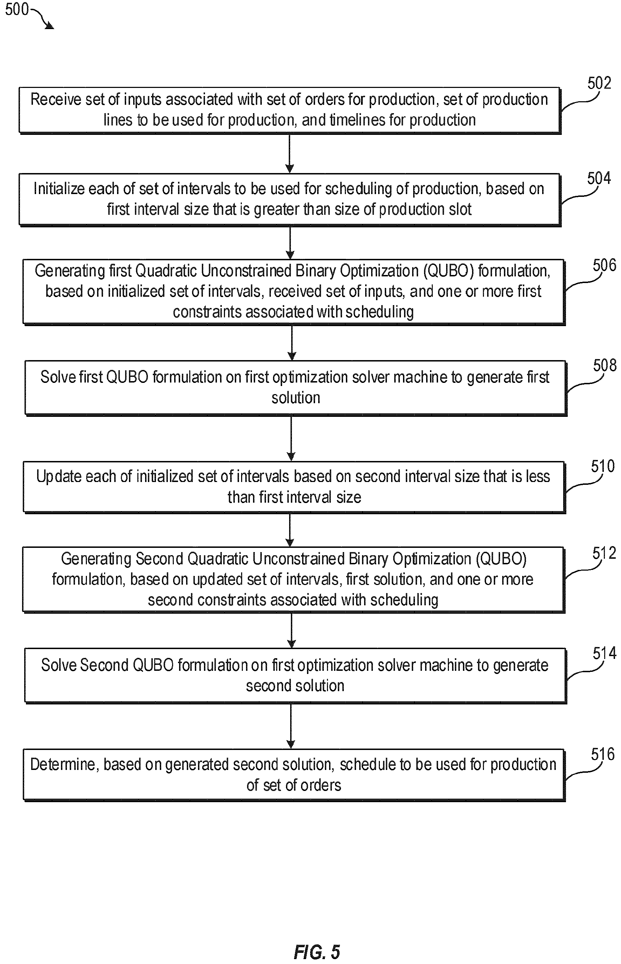

FIG. 5 is a flowchart of an exemplary method for multilevel method for production scheduling using optimization solver machines, arranged in accordance with at least one embodiment described in the present disclosure. FIG. 5 is explained in conjunction with elements from FIG. 1, FIG. 2, FIG. 3A, FIG. 3B, and FIG. 4. With reference to FIG. 5, there is shown a flowchart 500. The example method illustrated in the flowchart 500 may start at 502 and may be performed by any suitable system, apparatus, or device, such as by the system 102 of FIG. 2.

At 502, the set of inputs may be received. The received set of inputs may be associated with the set of orders for production, the set of production lines to be used for the production, and the timelines for the production. Specifically, the received set of inputs may include the first input associated with a set of orders for production, the second input associated with a set of production lines to be used for the production, and third input associated with timelines for the production. In one or more embodiments, the processor 202 may be configured to receive the set of inputs with the set of orders for production, the set of production lines to be used for the production, and the timelines for the production.

At 504, each of the set of intervals to be used for scheduling of the production may be initialized. Each of the set of intervals may be initialized based on a first interval size that is greater than a size of a production slot. For example, if the first interval size is equal to a day, then each of the set of intervals may correspond to a weekday (assuming the production facility is not operational on weekends). In one or more embodiments, the processor 202 may be configured to initialize each of the set of intervals to be used for scheduling of the production based on a first interval size that is greater than a size of a production slots.

At 506, a first Quadratic Unconstrained Binary Optimization (QUBO) formulation may be generated. The first QUBO formulation may be generated based on the initialized set of intervals, the received set of inputs, and one or more first constraints associated with the scheduling. In one or more embodiments, the processor 202 may be configured to generate the first QUBO formulation based on the initialized set of intervals, the received set of inputs, and one or more first constraints associated with the scheduling. Details about the QUBO formulation are provided in FIG. 4.

At 508, the first QUBO formulation may be solved. The first QUBO formulation may be solved on a first optimization solver machine 108 to generate a first solution. In one or more embodiments, the processor 202 may be configured to solve the first QUBO formulation on the first optimization solver machine 108 to generate the first solution.

At 510, each of the initialized set of intervals may be updated. The initialized set of intervals may be updated based on a second interval size that may be less than the first interval size. The second interval size may be equal to the size of the production slot. In one or more embodiments, the processor 202 may be configured to update each of the initialized set of intervals based on the second interval size that may be less than the first interval size.

At 512, a second Quadratic Unconstrained Binary Optimization (QUBO) formulation may be generated. The second QUBO formulation may be generated based on the updated set of intervals, the first solution, and one or more second constraints associated with the scheduling. In one or more embodiments, the processor 202 may be configured to generate the second QUBO formulation based on updated set of intervals, the first solution, and one or more second constraints associated with the scheduling. Details about the QUBO formulation are provided in FIG. 4.

At 514, the second QUBO formulation may be solved. The second QUBO formulation may be solved on the first optimization solver machine 108 to generate the second solution. In one or more embodiments, the processor 202 may be configured to solve the second QUBO formulation on the first optimization solver machine 108 to generate the second solution.

At 516, a schedule to be used for the production of the set of orders may be determined. The schedule may be determined based on the generated second solution. In one or more embodiments, the processor 202 may be configured to determine the schedule to be used for the production of the set of orders based on the generated second solution. The schedule may include an allocation of each of the set of orders to a corresponding production slot of one of the set of production lines.

Control may pass to end. Although the flowchart 500 is illustrated as discrete operations, such as 502, 504, 506, 508, 510, 512, 514, and 516; however, in certain embodiments, such discrete operations may be further divided into additional operations, combined into fewer operations, or eliminated, depending on the particular implementation.

FIG. 6 is a flowchart of an example method of solving subproblems associated with production scheduling problem using heuristics, arranged in accordance with at least one embodiment described in the present disclosure. FIG. 6 is explained in conjunction with elements from FIG. 1, FIG. 2, FIG. 3A, FIG. 3B, FIG. 4, and FIG. 5. With reference to FIG. 6, there is shown a flowchart 600. The example method illustrated in the flowchart 600 may start at 602 and may be performed by any suitable system, apparatus, or device, such as by the system 102 of FIG. 2.

At 602, a set of inputs may be received, as also described in FIG. 1 and FIG. 4. In heuristics-based method, the set of inputs may include a fifth input, which may be received via the electronic UI 106. The fifth input may be associated with warning level thresholds to be associated with the schedule. Each warning level threshold may correspond a maximum warning level that can be associated with the schedule. Specifically, the warning level thresholds may be associated with each production line of the set of production lines. In one or more embodiments, the processor 202 may be configured to receive the fifth input associated with warning level thresholds to be associated with the schedule.

At 604, each of the set of orders may be sorted on the set of production lines based on the third input (as described in FIG. 4). More specifically, each of the set of orders on the set of production lines may be sorted based on an earliest allowed start date associated with the set of orders. In one or more embodiments, the processor 202 may be configured to sort each of the received set of orders on the set of production lines based on the received third input.

At 606, a warning level threshold may be allocated to each production line of the set of production lines. In one or more embodiments, the processor 202 may be configured to allocate the warning level threshold to each production line of the set of production lines.

At 608, as many of the sorted set of orders may be assigned to the production slots available with the production lines. In some embodiments, one or more orders may remain unassigned as a number of production slots may be unavailable as per the earliest allowed start date of such orders.

At 610, it may be determined whether each of the set of orders is assigned to at least one production slot of at least one production line of the set of production lines. In case each order is assigned to at least one production slot, the control may pass to end at 612 and the schedule may be determined based on the assignment at 608. Otherwise, the control may pass to 614.

At 614, at least one unassigned order may be assigned to a next available production slot. For each order, the next available production slot may be an available slot available after the earliest allowed start date for the corresponding order. The assignment of the unassigned set of orders may incur a penalty. The processor 202 may be configured to compute a total penalty incurred due to assignment of each unassigned order of a set of unassigned orders. Once computed, the total penalty may be saved in the memory 204.

At 616, it may be determined whether the total penalty (computed at 614) is less than the warning level threshold (allocated at 606). In case the computed total penalty is less than the warning level threshold, the control may pass to 618. Otherwise, the control may pass to 614.

At 618, assigned orders and production slots assigned to such orders may be removed from the set of orders and a set of available production slots, respectively. The set of available slots may be slots in which no order has been assigned.

At 620, it may be determined whether the set of available production slots is empty. In case the set of available slots is empty, the control may pass to 622. Otherwise the control may pass to 614 and unassigned orders may be assigned to next available slots until all the unassigned orders have been assigned.

At 622, a next warning level threshold may be selected from the received warning level thresholds to be associated with the schedule. After the selection of the next warning level threshold, the control may pass to 606 and all the unassigned orders may be assigned to available production slots according to the next warning level threshold. After several iterations, a schedule may be determined to include a mapping of all the orders to production slots associated with the production lines.

In some instances, the schedule for the production using the heuristic approach may be different from the schedule generated by solving the production scheduling problem (and the subproblems) on the optimization solver machines (as described in FIG. 4, and FIG. 5). While the schedule associated with the heuristic approach may be determined quickly in comparison to the schedule determined by solving the production scheduling problem (and the subproblems) on the optimization solver machines, the schedule associated with the heuristic approach may be less optimal (i.e. may incur more penalty) in comparison to the schedule determined by solving the production scheduling problem (and the subproblems) on the optimization solver machines.

Although the flowchart 600 is illustrated as discrete operations, such as 602, 604, 606, 608, 610, 612, 614, 616, 618, 620, and 622; however, in certain embodiments, such discrete operations may be further divided into additional operations, combined into fewer operations, or eliminated, depending on the particular implementation.

Various embodiments of the disclosure may provide a non-transitory computer-readable storage medium configured to store instructions that, in response to being executed, causes a system (such as the system 102) to perform operations that include receiving a set of inputs that include a first input associated with a set of orders for production, a second input associated with a set of production lines to be used for the production, and a third input associated with timelines for the production. The operations may further include initializing each of a set of intervals to be used for scheduling of the production based on a first interval size that may be greater than a size of a production slot. The operations may further include generating a first Quadratic Unconstrained Binary Optimization (QUBO) formulation, based on the initialized set of intervals, the received set of inputs, and one or more first constraints associated with the scheduling. The operations may further include solving the first QUBO formulation on a first optimization solver machine to generate a first solution. The operation may further include updating each of the initialized set of intervals based on a second interval size that is less than the first interval size. The operation may further include generating a second QUBO formulation, based on the updated set of intervals, the first solution, and one or more second constraints associated with the scheduling. The operations may further include solving the generated second QUBO formulation on the first optimization solver machine to generate a second solution. The operations may further include determining a schedule to be used for the production of the set of orders on the set of production lines based on the generated second solution.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method, comprising:

   receiving a set of inputs comprising:

      a first input associated with a set of orders for production,
      a second input associated with a set of production lines to be used for the production, and
      a third input associated with timelines for the production;

   initializing each of a set of intervals to be used for scheduling of the production, based on a first interval size that is greater than a size of a production slot;
   generating a first Quadratic Unconstrained Binary Optimization (QUBO) formulation, based on the initialized set of intervals, the received set of inputs, and one or more first constraints associated with the scheduling;
   solving the first QUBO formulation on a first optimization solver machine to generate a first solution;
   updating each of the initialized set of intervals based on a second interval size that is less than the first interval size;
   generating a second QUBO formulation, based on the updated set of intervals, the first solution, and one or more second constraints associated with the scheduling;

solving the generated second QUBO formulation on the first optimization solver machine to generate a second solution; and

determining, based on the generated second solution, a schedule to be used for the production of the set of orders.

2. The method according to claim 1, wherein the third input comprises of:

first information associated with a day-wise availability of each of the set of production lines, and

second information associated with a set of delivery dates associated with the set of orders.

3. The method according to claim 1, wherein the schedule includes an allocation of each of the set of orders to a corresponding production slot of one of the set of production lines.

4. The method according to claim 1, wherein the second interval size is equal to the size of the production slot.

5. The method according to claim 1, further comprising:

updating each of the updated set of intervals based on a third interval size, wherein the third interval size is equal to the size of the production slot and is less than the first interval size and the second interval size;

generating a third QUBO formulation, based on the received set of inputs, the second solution, and one or more third constraints associated with the scheduling; and

solving the generated third QUBO formulation on the first optimization solver machine to generate a third solution, wherein the schedule to be used for the production is determined further based on the generated third solution.

6. The method according to claim 5, wherein the first interval size corresponds to a month and the second interval size corresponds to a day.

7. The method according to claim 1, further comprising determining the first interval size and the second interval size based on an order volume associated with the set of orders and the timelines for the production.

8. The method according to claim 1, wherein the one or more second constraints are different from the one or more first constraints.

9. The method according to claim 1, wherein the received set of inputs further comprises a fourth input that comprises of a selection of a set of constraints associated with the production, and

the set of constraints comprises of the one or more first constraints and the one or more second constraints.

10. The method according to claim 9, wherein the set of constraints comprises of:

a first constraint which determines a first maximum number of orders producible in a day without incurring a first penalty,

a second constraint which determines a second maximum number of orders producible within a production bucket without incurring a second penalty,

a third constraint which determines an earliest start date of the production without incurring a third penalty,

a fourth constraint which determines a latest end date of the production without incurring a fourth penalty,

a fifth constraint which determines a maximum of a first number of orders producible in a first number of sequential production slots without incurring a fifth penalty, and

a sixth constraint which determines a minimum number of unoccupied production slots between a pair of occupied production slots without incurring a sixth penalty.

11. The method according to claim 1, wherein the generated first QUBO formulation encodes the one or more first constraints and the generated second QUBO formulation encodes the one or more second constraints.

12. The method according to claim 1, further comprising computing a total warning level based on the determined schedule,

wherein the computed total warning level indicates a total penalty incurred as a result of a violation of the one or more first constraints and the one or more second constraints.

13. The method according to claim 12, further comprising displaying the determined schedule and the computed total warning level on a display device.

14. The method according to claim 1, wherein the received set of inputs further comprises of a fifth input associated with a warning level threshold to be associated with the schedule.

15. The method according to claim 1, further comprising:

    transforming the generated first QUBO formulation into a first Ising formulation; and
    solving the generated first QUBO formulation on a second optimization solver machine to generate the first solution.

16. The method according to claim 1, further comprising:

    transforming the generated second QUBO formulation into a second Ising formulation; and
    solving the generated second QUBO formulation on a second optimization solver machine to generate the second solution.

17. A non-transitory computer-readable storage medium configured to store instructions that, in response to being executed, causes a system to perform operations, the operations comprising:

    receiving a set of inputs comprising:

        a first input associated with a set of orders for production,
        a second input associated with a set of production lines to be used for the production, and
        a third input associated with timelines for the production;

    initializing each of a set of intervals to be used for scheduling of the production, based on a first interval size that is greater than a size of a production slot;
    generating a first Quadratic Unconstrained Binary Optimization (QUBO) formulation, based on the initialized set of intervals, the received set of inputs, and one or more first constraints associated with the scheduling;
    solving the first QUBO formulation on a first optimization solver machine to generate a first solution;
    updating each of the initialized set of intervals based on a second interval size that is less than the first interval size;
    generating a second QUBO formulation, based on the updated set of intervals, the first solution, and one or more second constraints associated with the scheduling;
    solving the generated second QUBO formulation on the first optimization solver machine to generate a second solution; and
    determining, based on the generated second solution, a schedule to be used for the production of the set of orders.

18. The non-transitory computer-readable storage medium according to claim 17, further comprising:

    transforming the generated first QUBO formulation into a first Ising formulation; and
    solving the generated first QUBO formulation on a second optimization solver machine to generate the first solution.

19. The non-transitory computer-readable storage medium according to claim 17, further comprising:

    transforming the generated second QUBO formulation into a second Ising formulation; and
    solving the generated second QUBO formulation on a second optimization solver machine to generate the second solution.

20. A system, comprising:
    a processor configured to:

    receive a set of inputs comprising:

        a first input associated with a set of orders for production,
        a second input associated with a set of production lines to be used for the production, and

a third input associated with timelines for the production;

initialize each of a set of intervals to be used for scheduling of the production, based on a first interval size that is greater than a size of a production slot;

generate a first Quadratic Unconstrained Binary Optimization (QUBO) formulation, based on the initialized set of intervals, the received set of inputs, and one or more first constraints associated with the scheduling;

solve the first QUBO formulation on a first optimization solver machine to generate a first solution;

update each of the initialized set of intervals based on a second interval size that is less than the first interval size;

generate a second QUBO formulation, based on the updated set of intervals, the first solution, and one or more second constraints associated with the scheduling;

solve the generated second QUBO formulation on the first optimization solver machine to generate a second solution; and

determine, based on the generated second solution, a schedule to be used for the production of the set of orders.

EP 4 113 402 A1

*FIG. 1*

200

FIG. 2

FIG. 3A

Electronic User Interface 300

**Enter Order Details** — 302A — 302B — 302C — 302

Enter/Upload Order

Order ID: 2304

Select Order Attributes ∨

Earliest Allowed Start Date ☐
Delivery Date ☑
⋮

Enter Attributes Value

Enter Delivery date in YYYY/MM/DD format

302D

Upload File | Browse

**Enter Production Lines Details** — 304A — 304B — 304C — 304

Select Production Line ∨

Production Line A
Production Line B
⋮

Select Date ∨

2021/06/01 ☐
2021/06/02 ☑
⋮

Select Available Slots ∨

Slot 1...Slot 20 ☑
Slot 21...Slot 40 ☑
⋮

Add More Production Lines — 304D

304E

OR | Upload File | Browse

**Enter Constraints Details** — 306A — 306B — 306C — 306

Select Constraint

MaxInDay
MaxInBucket
⋮

Enter Penalty for constraint violation

5

Brief Description

More than 10 orders in a day will incur a penalty of 5 per order.

Add More Constraints — 306D

Electronic User Interface <u>300</u>

Enter Solution Technique

308

308A

◎ QUBO/Ising Approach

308B

⬤ Heuristic Approach

308C

Enter Warning Level Thresholds

10, 20, 30, 40, 50

310

Submit

EP 4 113 402 A1

FIG. 3B

400

402 Data Acquisition

404 Sub-problems Generation

406 Sub-Problem Selection

P1   P2   P3   - - -   Pn

408 Intervals Update

416 Select Next Sub-problem

410 QUBO formulation Generation

412 Solution Generation

414 Whether generated solution is final solution?

No

Yes

418 Presentation Data Determination

420 Presentation Data Rendering

*FIG. 4*

500

502
Receive set of inputs associated with set of orders for production, set of production lines to be used for production, and timelines for production

504
Initialize each of set of intervals to be used for scheduling of production, based on first interval size that is greater than size of production slot

506
Generating first Quadratic Unconstrained Binary Optimization (QUBO) formulation, based on initialized set of intervals, received set of inputs, and one or more first constraints associated with scheduling

508
Solve first QUBO formulation on first optimization solver machine to generate first solution

510
Update each of initialized set of intervals based on second interval size that is less than first interval size

512
Generating Second Quadratic Unconstrained Binary Optimization (QUBO) formulation, based on updated set of intervals, first solution, and one or more second constraints associated with scheduling

514
Solve Second QUBO formulation on first optimization solver machine to generate second solution

516
Determine, based on generated second solution, schedule to be used for production of set of orders

FIG. 5

600

Receive set of inputs including fifth input associated with warning level
thresholds to be associated with schedule — 602

Sort each of set of orders on set of production lines based on received third input — 604

Allocate Warning level threshold to each of set of production lines — 606

Assign as many of sorted orders to production slots available with production
lines — 608

612

Exit ←— Yes —— Whether each of set
of orders assigned? — 610

No

Assign at least one unassigned order to next available production slot — 614

No —— Total Penalty < Warning
Level Threshold — 616

Yes

Remove assigned orders from set of orders and assigned production slots from
set of available production slots — 618

No —— Whether set of available
production slots empty? — 620

Yes

Select next warning level threshold from received warning levels — 622

*FIG. 6*

Europäisches
Patentamt

European
Patent Office

Office européen
des brevets

# EUROPEAN SEARCH REPORT

Application Number

EP 22 17 1563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/401650 A1 (CHEN WEI-PENG [US] ET AL) 24 December 2020 (2020-12-24) * pages 3, 4, 8 * ----- | 1-20 | INV. G06Q10/04 G06Q50/04 G06Q10/06 |
| X | DENKENA BEREND ET AL: "Quantum algorithms for process parallel flexible job shop scheduling", CIRP JOURNAL OF MANUFACTURING SCIENCE AND TECHNOLOGY, vol. 33, 23 March 2021 (2021-03-23), pages 100-114, XP055827404, AMSTERDAM, NL ISSN: 1755-5817, DOI: 10.1016/j.cirpj.2021.03.006 * claims 1, 3, 11, 13 * ----- | 1-20 | |

TECHNICAL FIELDS SEARCHED (IPC)

G06Q

The present search report has been drawn up for all claims

| Place of search | Date of completion of the search | Examiner |
|---|---|---|
| Munich | 19 October 2022 | Haitof, Houssam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 1563

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2022

| Patent document cited in search report | | Publication date | Patent family member(s) | | Publication date |
|---|---|---|---|---|---|
| US 2020401650 | A1 | 24-12-2020 | CA | 3079066 A1 | 20-12-2020 |
| | | | CN | 112116093 A | 22-12-2020 |
| | | | EP | 3754566 A1 | 23-12-2020 |
| | | | JP | 2021002331 A | 07-01-2021 |
| | | | US | 2020401650 A1 | 24-12-2020 |

EPO FORM P0459

For more details about this annex : see Official Journal of the European Patent Office, No. 12/82